# EUROPEAN PATENT APPLICATION

(11) **EP 4 760 841 A1**
(43) Date of publication of application: **17.06.2026**
(21) Application number: 25782845.9
(22) Date of filing: 27.03.2025
(51) Int. Cl.: H01M 10/04, H01M 10/0585, H01M 10/48, G01B 21/16, G06Q 50/04, G05B 19/418, H01M 10/42

(54) **BATTERY MANUFACTURING APPARATUS AND BATTERY MANUFACTURING METHOD**

(30) Priority: 02.04.2024 KR 20240044655
(71) Applicant: LG Energy Solution, Ltd., Seoul 07335 (KR)
(72) Inventor: SHIN, Nak Cheon, Daejeon 34122 (KR); BOO, Jang Hun, Daejeon 34122 (KR); PARK, Kyoung Chan, Daejeon 34122 (KR); PARK, Jong Hyun, Daejeon 34122 (KR); KIM, Jun Beom, Daejeon 34122 (KR); KIM, Min Su, Daejeon 34122 (KR)
(74) Representative: BCKIP Part mbB
(86) International application number: PCT/KR2025/003921
(87) International publication number: WO 2025/211643

(57) **Abstract**

The technical idea of the present invention provides a battery manufacturing apparatus comprising: a sealing device configured to bond a part of a first separator to a part of a second separator to form a separator assembly having a sealed area; a first inspection device configured to detect a first distance between the sealed area of the separator assembly and a first electrode attached to the separator assembly; a cutting device configured to cut the separator assembly so as to separate, from the separator assembly, a first unit separator assembly to which the first electrode is attached; and a second inspection device configured to detect a second distance between the first electrode and an edge of the first unit separator assembly.

## Description

### [Technical Field]

The present disclosure relates to a battery manufacturing apparatus and a battery manufacturing method.

This application claims the benefit of priority from Korean Patent Application No. 10-2024-0044655, filed on April 02, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, and wireless vacuum cleaners. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Secondary batteries are manufactured through an electrode process, an assembly process and an activation process. Among them, the electrode process is the most essential process for determining the yield and performance of the battery cell. The electrode process may include a coating process, a roll pressing process, and a slitting process. In the coating process, active materials and insulating materials may be coated on the surface of the current collector. In the roll pressing process, the electrode may be pressed by pressing rolls. The roll pressing process may determine the density, performance, and surface quality of the electrodes. In the slitting process, the electrodes may be cut into a plurality of electrodes according to the battery cell design.

### [Summary]

### [Technical Problem]

The technical problem to be solved by the present disclosure is to provide a battery manufacturing apparatus and a battery manufacturing method.

### [Technical Solution]

To solve the above-described problem, the technical idea of the present disclosure provides a battery manufacturing apparatus including: a sealing device configured to bond a portion of a first separator to a portion of a second separator to form a separator joint body having a sealing area; a first inspection device configured to detect a first distance between the sealing area of the separator joint body and a first electrode attached to the separator joint body; a cutting device configured to cut the separator joint body to separate a first unit separator joint body having the first electrode attached thereto from the separator joint body; and a second inspection device configured to detect a second distance between the first electrode and an edge of the first unit separator joint body.

In exemplary embodiments, the second inspection device is further configured to detect a sealing width of a unit sealing area of the first unit separator joint body based on the first distance and the second distance, and the unit sealing area of the first unit separator joint body is a portion of the sealing area of the separator joint body.

In exemplary embodiments, the second inspection device is configured to compare the sealing width of the unit sealing area of the first unit separator joint body with a reference range.

In exemplary embodiments, the second inspection device is configured to determine that the sealing width of the unit sealing area of the first unit separator joint body is normal when the sealing width of the unit sealing area of the first unit separator joint body is within the reference range, and determine that the sealing width of the unit sealing area of the first unit separator joint body is defective when the sealing width of the unit sealing area of the first unit separator joint body is outside the reference range.

In exemplary embodiments, the battery manufacturing apparatus further includes: a tab sensor provided between the sealing device and the first inspection device and configured to sense an electrode tab of the first electrode extracted from the sealing device to generate a tab sensing signal; and a controller configured to generate a virtual ID for the first electrode based on the tab sensing signal of the tab sensor, wherein the first inspection device is configured to match data for the first distance with data for the virtual ID.

In exemplary embodiments, the battery manufacturing apparatus further includes a reader configured to read an electrode ID of the first electrode extracted from the cutting device and to transmit data for the electrode ID of the first electrode to the controller.

In exemplary embodiments, the second inspection device is configured to match data for the second distance with data for the first distance, data for the virtual ID, and data for the electrode ID.

In exemplary embodiments, the second inspection device is further configured to detect a sealing width of a unit sealing area of the first unit separator joint body based on the first distance and the second distance, wherein the unit sealing area of the first unit separator joint body is a portion of the sealing area of the separator joint body, and wherein the second inspection device is configured to match data for the sealing width of the unit sealing area of the first unit separator joint body with data for the virtual ID and data for the electrode ID.

In exemplary embodiments, the first inspection device is further configured to detect a third distance between the sealing area of the separator joint body and a second electrode attached to the separator joint body, the sealing area of the separator joint body is between the first electrode and the second electrode, wherein the cutting device is further configured to cut the separator joint body to separate a second unit separator joint body with the second electrode attached thereto from the separator joint body, and wherein the second inspection device is further configured to detect a fourth distance between the second electrode and an edge of the second unit separator joint body.

In exemplary embodiments, the second inspection device is further configured to detect a sealing width of a unit sealing area of the first unit separator joint body based on the first distance and the second distance, and to detect a sealing width of a unit sealing area of the second unit separator joint body based on the third distance and the fourth distance, wherein the unit sealing area of the first unit separator joint body is a portion of the sealing area of the separator joint body, and wherein the unit sealing area of the second unit separator joint body is another portion of the sealing area of the separator joint body.

To solve the above-described problem, the technical idea of the present disclosure provides a battery manufacturing method including: forming a separator joint body having a sealing area by bonding a portion of a first separator to a portion of a second separator; detecting a first distance between the sealing area of the separator joint body and an electrode attached to the first separator; cutting the separator joint body to separate a first unit separator joint body having the electrode attached thereto from the separator joint body; and detecting a second distance between the electrode and an edge of the first unit separator joint body.

In exemplary embodiments, the battery manufacturing method further includes detecting a sealing width of a unit sealing area of the first unit separator joint body based on the first distance and the second distance, wherein the unit sealing area of the first unit separator joint body is a portion of the sealing area of the separator joint body.

In exemplary embodiments, the battery manufacturing method further includes generating a virtual ID for the electrode before the step of detecting the first distance.

In exemplary embodiments, the battery manufacturing method further includes reading an electrode ID of the electrode.

In exemplary embodiments, the battery manufacturing method further includes matching the sealing width of the unit sealing area of the first unit separator joint body with data for the virtual ID for the electrode and data for the electrode ID of the electrode.

### [Advantageous Effects]

According to exemplary embodiments of the present disclosure, without additional measurement equipment, based on first distance data for a first distance between a sealing area of a separator joint body and a corresponding electrode acquired before a cutting process and second distance data for a second distance between an edge of a unit separator joint body and a corresponding electrode acquired after the cutting process, the sealing width of a unit sealing area of the unit separator joint body provided to a unit cell can be detected.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a cross-sectional view schematically illustrating a battery manufacturing apparatus according to exemplary embodiments of the present disclosure.
FIG. 2 is a plan view schematically illustrating a battery manufacturing apparatus according to exemplary embodiments of the present disclosure.
FIG. 3 is a diagram schematically illustrating an inspection image acquired by a first inspection device.
FIG. 4 is a diagram schematically illustrating an inspection image acquired by a second inspection device.
FIG. 5 is a flow diagram illustrating a manufacturing method of a battery according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and may be interpreted as meanings and concepts that conform to the technical idea of the present disclosure based on the principle that the inventors may appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof may be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component may not entirely reflect the actual size or ratio.

### (first embodiment)

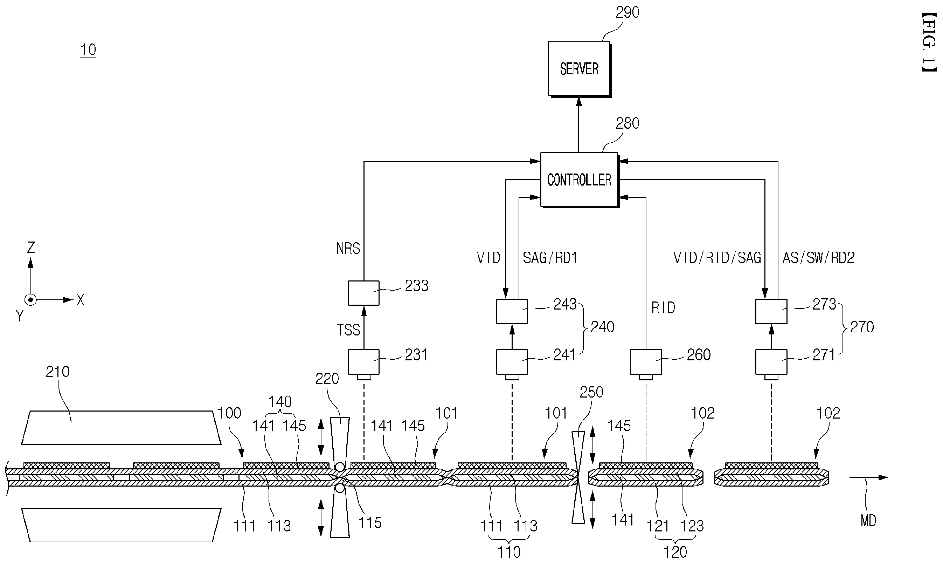

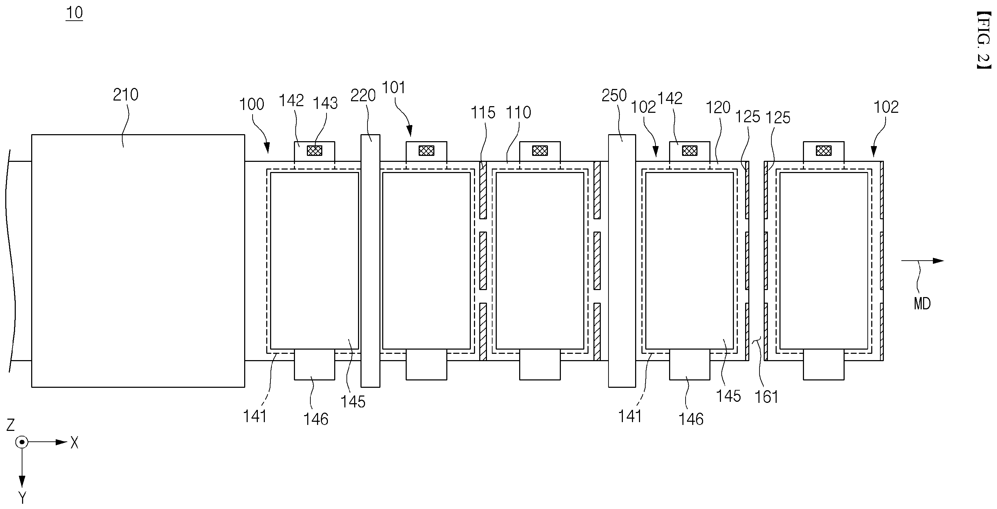

FIG. 1 is a cross-sectional view schematically illustrating a battery manufacturing apparatus 10 according to exemplary embodiments of the present disclosure. FIG. 2 is a plan view schematically illustrating a battery manufacturing apparatus 10 according to exemplary embodiments of the present disclosure.

Referring to FIG. 1 and FIG. 2, the battery manufacturing apparatus 10 may include a lamination device 210, a sealing device 220, a tab sensor 231, a first inspection device 240, a cutting device 250, a reader 260, a second inspection device 270, and a controller 280.

The battery manufacturing apparatus 10 may be configured to process electrode semi-finished products, which are intermediate products for manufacturing battery cells. The electrode semi-finished products may include one or more electrodes 140 and one or more separators. Within the battery manufacturing apparatus 10, the electrode semi-finished products may be continuously transferred along a predetermined transport path through a transfer device. The transfer device may be a linear motion system. For example, the transfer device may include a roll-to-roll transfer device and/or a conveyor transfer device. The lamination device 210, the sealing device 220, the tab sensor 231, the first inspection device 240, the cutting device 250, the reader 260, and the second inspection device 270 may be sequentially arranged along a movement direction (MD) of the electrode semi-finished products by the transfer device.

The lamination device 210 may be provided with a laminate 100 including a lower separator 111, an upper separator 113 on the lower separator 111, and a plurality of electrodes 140 disposed on each of the lower separator 111 and the upper separator 113. The lower separator 111 may be referred to as a first separator, and the upper separator 113 may be referred to as a second separator. The plurality of electrodes 140 may include lower electrodes 141 arranged in a first direction (for example, X direction) on the lower separator 111 and spaced apart from each other in the first direction (for example, X direction), and upper electrodes 145 arranged in the first direction (for example, X direction) on the upper separator 113 and spaced apart from each other in the first direction (for example, X direction).

The lower electrode 141 and the upper electrode 145 may have different polarities. The lower electrode 141 may have an electrode tab 142 protruding from the lower separator 111 and the upper separator 113 in a second direction (for example, Y direction). The upper electrode 145 may have an electrode tab 146 protruding from the lower separator 111 and the upper separator 113 in the second direction (for example, Y direction). In exemplary embodiments, the lower electrode 141 may be a negative electrode, and the upper electrode 145 may be a positive electrode. In other exemplary embodiments, the lower electrode 141 may be a positive electrode, and the upper electrode 145 may be a negative electrode.

The lamination device 210 may perform a lamination process that attaches the plurality of electrodes 140 to the lower separator 111 and/or the upper separator 113 by applying heat and/or pressure. The lamination device 210 may include a heating part having a heat source for applying heat, and a pressure roll that applies pressure so that the plurality of electrodes 140 are pressed onto the lower separator 111 and/or the upper separator 113.

The sealing device 220 may receive the laminate 100 extracted from the lamination device 210 and perform a separator sealing process that bonds between a portion of the upper separator 113 and a portion of the lower separator 111. The sealing device 220 may apply heat and/or pressure to a portion of the upper separator 113 and a portion of the lower separator 111 to form a sealing area 115 where the portion of the upper separator 113 and the portion of the lower separator 111 are bonded. Through the separator sealing process, a separator joint body 110 including the upper separator 113 and the lower separator 111 bonded to each other in the sealing area 115 may be formed. The sealing device 220 may include a sealing tip configured to apply heat and/or pressure to a portion of the lower separator 111 and a portion of the upper separator 113. The sealing tip may be configured to move by an actuator.

More specifically, a portion of the lower separator 111 between two lower electrodes 141 adjacent in the first direction (for example, X direction) and a portion of the upper separator 113 between two upper electrodes 145 adjacent in the first direction (for example, X direction) may be bonded to each other to form the sealing area 115. The sealing area 115 may be between two lower electrodes 141 adjacent in the first direction (for example, X direction) and may extend continuously or discontinuously in the second direction (for example, Y direction). When the separator sealing process is completed, two lower electrodes 141 adjacent in the first direction (for example, X direction) may be spaced apart with the sealing area 115 therebetween.

The tab sensor 231 may be disposed between the sealing device 220 and the first inspection device 240 and may detect an electrode tab of the electrode 140 extracted from the sealing device 220. The tab sensor 231 may generate a tab sensing signal (TSS) by detecting the electrode tab of the electrode 140 extracted from the sealing device 220 and may transmit the generated tab sensing signal (TSS) to the controller 280. For example, the tab sensor 231 may include a camera and/or an image sensor.

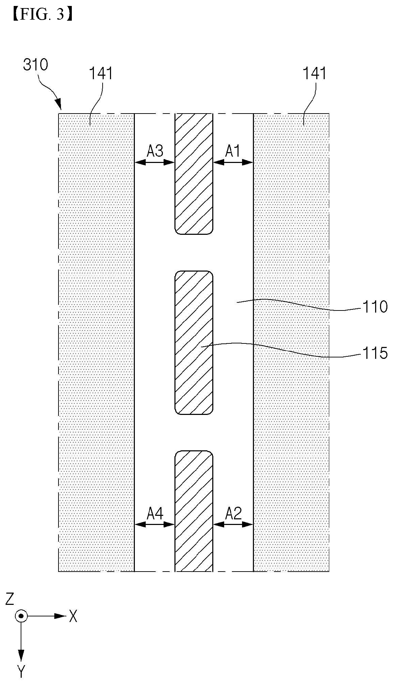

FIG. 3 is a diagram schematically illustrating an inspection image 310 acquired by a first inspection device 240.

Referring to FIG. 1 to FIG. 3, the first inspection device 240 may receive a laminate 101 including a separator joint body 110 and a plurality of electrodes 140, and may detect a first distance between a sealing area 115 of the separator joint body 110 and an edge of a corresponding electrode 140. The first distance may refer to a distance along a first direction (for example, X direction) between the sealing area 115 of the separator joint body 110 and an edge of the corresponding electrode 140. The first inspection device 240 may generate first distance data (SAG) for the first distance and may transmit the generated first distance data (SAG) to the controller 280.

The first inspection device 240 may include a vision device 241 and a processor 243. The vision device 241 may photograph or capture an image of the laminate 101 and may generate an inspection image 310 of the laminate 101. The processor 243 may process the inspection image 310 to detect the first distance and generate first distance data (SAG).

The vision device 241 may include a camera and/or an image sensor. The processor 243 may be implemented by hardware, firmware, software, and combinations thereof. For example, the processor 243 may include computing devices such as a workstation computer, a desktop computer, a laptop computer, a tablet computer, etc. The processor 243 may include any one of simple controllers, complex processors such as microprocessors, CPUs, GPUs, etc., processors configured by software, dedicated hardware, and firmware. The processor 243 may be implemented by, for example, a general-purpose computer or application-specific hardware such as a Digital Signal Processor (DSP), a Field Programmable Gate Array (FPGA), and an Application Specific Integrated Circuit (ASIC).

In the inspection image 310, the sealing area 115 of the separator joint body 110 and at least a portion of each of two lower electrodes 141 disposed on both sides of the sealing area 115 of the separator joint body 110 may appear. Since a side portion of the lower electrode 141 adjacent to the sealing area 115 is not covered by the upper electrode 145, the side portion of the lower electrode 141 may appear in the inspection image 310. The processor 243 may process the inspection image 310 to detect a first distance between an edge of each of the two lower electrodes 141 and the sealing area 115 of the separator joint body 110.

In exemplary embodiments, the first inspection device 240 may detect first distances (A1, A2) between the lower electrode 141 on one side of the sealing area 115 and the sealing area 115 at a plurality of detection points (for example, a first detection point and a second detection point), and may detect first distances (A3, A4) between the lower electrode 141 on the other side of the sealing area 115 and the sealing area 115 at a plurality of detection points (for example, a third detection point and a fourth detection point).

Referring again to FIG. 1 and FIG. 2, the cutting device 250 may receive the laminate 101 that has passed through the first inspection device 240 and may cut the separator joint body 110 from the introduced laminate 101. The cutting device 250 may include a cutting knife configured to move by an actuator. The cutting device 250 may cut the separator joint body 110 along a cutting line that traverses the sealing area 115 of the separator joint body 110 in a second direction (for example, Y direction) to separate the separator joint body 110 into a plurality of unit separator joint bodies 120. The plurality of unit separator joint bodies 120 may be spaced apart from each other in a first direction (for example, X direction) with a cutting area 161 therebetween. Each unit separator joint body 120 may include a unit lower separator 121 separated from the lower separator 111 and a unit upper separator 123 separated from the upper separator 113. The unit separator joint body 120, the lower electrode 141 attached to the unit separator joint body 120, and the upper electrode 145 attached to the unit separator joint body 120 may comprise a unit cell 102. The unit cell 102 may be a mono cell.

Since the cutting device 250 cuts the separator joint body 110 along a cutting line that traverses the sealing area 115 in a second direction (for example, Y direction), the unit separator joint body 120 may have a unit sealing area 125 corresponding to a portion of the sealing area 115 of the separator joint body 110. In the unit separator joint body 120, the unit sealing area 125 may extend in a first direction (for example, X direction) from an edge of the unit separator joint body 120 generated through the cutting process.

The reader 260 may read an electrode ID of the electrode 140 included in the unit cell 102 and may generate data (RID) for the electrode ID of the read electrode 140. The reader 260 may transmit the generated data (RID) for the electrode ID to the controller 280. The reader 260 may include a vision device such as a camera and/or an image sensor for acquiring an image of the electrode tab, and a processor for processing the image of the electrode tab generated by the vision device. The electrode ID may correspond to a physical ID formed on the electrode tab of the electrode 140 by laser printing and ink printing methods. The electrode ID may include Arabic numerals, letters, one-dimensional codes, and/or two-dimensional codes. The electrode ID may include information about a process history of the electrode 140.

In exemplary embodiments, the lower electrode 141 may have an electrode ID 143 provided on its electrode tab 142, and the reader 260 may be configured to read the electrode ID 143 of the lower electrode 141. In some exemplary embodiments, the upper electrode 145 may have an electrode ID provided on its electrode tab 146, and the reader 260 may be configured to read the electrode ID of the upper electrode 145.

According to exemplary embodiments, the reader 260 may read the electrode ID of the electrode 140, thereby increasing traceability of electrode semi-finished products within the battery manufacturing apparatus 10.

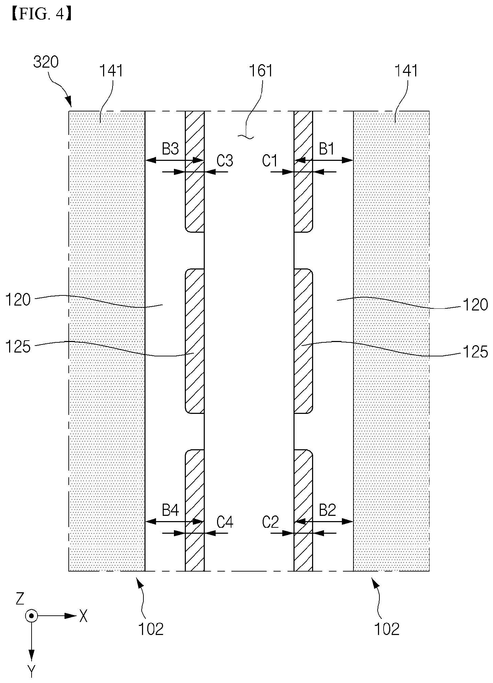

FIG. 4 is a diagram schematically illustrating an inspection image 320 acquired by a second inspection device 270.

Referring to FIG. 1, FIG. 2, and FIG. 4, the second inspection device 270 may receive a unit cell 102 including a unit separator joint body 120 and a plurality of electrodes 140, and may detect a second distance between an edge of the unit separator joint body 120 and an edge of a corresponding electrode 140 in the introduced unit cell 102. The second distance may refer to a distance along a first direction (for example, X direction) between the edge of the unit separator joint body 120 and the edge of the corresponding electrode 140. The second inspection device 270 may generate second distance data (AS) for the second distance and may transmit the generated second distance data (AS) to the controller 280.

The second inspection device 270 may include a vision device 271 and a processor 273. The vision device 271 may photograph or capture an image of the unit cell 102 and may generate an inspection image 320 of the unit cell 102. The inspection image 320 may include at least a portion of each of two unit cells 102 spaced apart in a first direction (for example, X direction) with a cutting area 161 therebetween. The processor 273 may process the inspection image 320 to detect the second distance and generate the second distance data (AS).

The vision device 271 may include a camera and/or an image sensor. The processor 273 may be implemented by hardware, firmware, software, and combinations thereof. For example, the processor 273 may include computing devices such as a workstation computer, a desktop computer, a laptop computer, a tablet computer, etc. The processor 273 may include any one of simple controllers, complex processors such as microprocessors, CPUs, GPUs, etc., processors configured by software, dedicated hardware, and firmware. The processor 273 may be implemented by, for example, a general-purpose computer or application-specific hardware such as a Digital Signal Processor (DSP), a Field Programmable Gate Array (FPGA), and an Application Specific Integrated Circuit (ASIC).

In the inspection image 320, two unit separator joint bodies 120 spaced apart with the cutting area 161 therebetween and at least a portion of each of two lower electrodes 141 attached to the two unit separator joint bodies 120 may appear. The processor 273 may detect a second distance between an edge of the unit separator joint body 120 and an edge of the lower electrode 141 in each of the two unit cells 102 spaced apart with the cutting area 161 therebetween based on the inspection image 320.

In exemplary embodiments, the second inspection device 270 may detect second distances (B1, B2) between the lower electrode 141 and the unit separator joint body 120 at a plurality of detection points (for example, a first detection point and a second detection point) of the unit cell 102 on one side of the cutting area 161, and may detect second distances (B3, B4) between the lower electrode 141 and the unit separator joint body 120 at a plurality of detection points (for example, a third detection point and a fourth detection point) of the unit cell 102 on the other side of the cutting area 161.

The second inspection device 270 may receive the first distance data (SAG) from the controller 280 and may detect a sealing width of the unit sealing area 125 of the unit separator joint body 120 based on the first distance data (SAG) and the second distance data (AS). The sealing width of the unit sealing area 125 of the unit separator joint body 120 may refer to a length of the unit sealing area 125 along a first direction (for example, X direction) measured from an edge of the unit separator joint body 120 adjacent to the cutting area 161. The second inspection device 270 may generate sealing width data (SW) for the sealing width of the unit sealing area 125 and may transmit the generated sealing width data (SW) to the controller 280.

The second inspection device 270 may compare the detected sealing width of the unit sealing area 125 of the unit separator joint body 120 with a predetermined reference range to determine whether the sealing width of the unit sealing area 125 of the unit separator joint body 120 is defective. If the detected sealing width of the unit sealing area 125 of the unit separator joint body 120 is within the reference range, the second inspection device 270 determines that the sealing width of the unit sealing area 125 of the unit separator joint body 120 is normal. If the detected sealing width of the unit sealing area 125 of the unit separator joint body 120 is outside the reference range, the second inspection device 270 determines that the sealing width of the unit sealing area 125 of the unit separator joint body 120 is defective. In exemplary embodiments, the reference range may be determined to be between 30% and 70% of a width of the sealing area 115 of the separator joint body 110 along the first direction (for example, X direction).

In exemplary embodiments, the second inspection device 270 may detect the sealing width of the unit sealing area 125 at a plurality of detection points of each unit cell 102 and may determine whether the detected sealing width of the unit sealing area 125 is defective at each of the plurality of detection points.

In exemplary embodiments, for the unit cell 102 on one side of the cutting area 161, a difference between a first distance (A1 in FIG. 3) between the lower electrode 141 and the sealing area 115 of the separator joint body 110 acquired at a first detection point and a second distance (B1) between an edge of the lower electrode 141 and an edge of the first unit separator joint body 120 acquired at the first detection point may be calculated to detect a sealing width (C1) of the unit sealing area 125 at the first detection point. A difference between a first distance (A2 in FIG. 3) between the lower electrode 141 and the sealing area 115 of the separator joint body 110 acquired at a second detection point and a second distance (B2) between an edge of the lower electrode 141 and an edge of the first unit separator joint body 120 acquired at the second detection point may be calculated to detect a sealing width (C2) of the unit sealing area 125 at the second detection point. The sealing width (C1) of the unit sealing area 125 at the first detection point and the sealing width (C2) of the unit sealing area 125 at the second detection point may each be compared with a predetermined reference range to determine whether sealing of the unit sealing area 125 in the unit cell 102 has been performed appropriately.

In exemplary embodiments, for the unit cell 102 on the other side of the cutting area 161, a difference between a first distance (A3 in FIG. 3) between the lower electrode 141 and the sealing area 115 of the separator joint body 110 acquired at the third detection point and a second distance (B3) between an edge of the lower electrode 141 and an edge of the first unit separator joint body 120 acquired at the third detection point may be calculated to detect a sealing width (C3) of the unit sealing area 125 at the third detection point. A difference between a first distance (A4 in FIG. 3) between the lower electrode 141 and the sealing area 115 of the separator joint body 110 acquired at a fourth detection point and a second distance (B4) between an edge of the lower electrode 141 and an edge of the first unit separator joint body 120 acquired at the fourth detection point may be calculated to detect a sealing width (C4) of the unit sealing area 125 at the fourth detection point. The sealing width (C3) of the unit sealing area 125 at the third detection point and the sealing width (C4) of the unit sealing area 125 at the fourth detection point may each be compared with a predetermined reference range to determine whether sealing of the unit sealing area 125 in the unit cell 102 has been performed appropriately.

Referring again to FIG. 1 and FIG. 2, the controller 280 may be connected to enable signal transmission to components of the battery manufacturing apparatus 10 (for example, the lamination device 210, the sealing device 220, the tab sensor 231, the first inspection device 240, the cutting device 250, the reader 260, the second inspection device 270, etc.) and may control operations of the components of the battery manufacturing apparatus 10.

The controller 280 may generate a virtual ID for the electrode 140 detected by the tab sensor 231 based on the tab sensing signal (TSS) of the tab sensor 231. More specifically, when the tab sensor 231 detects the electrode 140 extracted from the sealing device 220 to generate a tab sensing signal (TSS), a trigger board 233 may generate a number request signal (NRS) based on the tab sensing signal (TSS) transmitted from the tab sensor 231, and the controller 280 may generate a virtual ID related to the corresponding electrode 140 based on the number request signal (NRS) of the trigger board 233.

The first inspection device 240 may receive data (VID) for a virtual ID associated with a specific electrode 140 transmitted from the controller 280 and may generate associated data (RD1) by matching first distance data (SAG) associated with the specific electrode 140 with the data (VID) for the virtual ID. The first inspection device 240 may transmit the generated associated data (RD1) to the controller 280.

The second inspection device 270 may receive data (VID) for a virtual ID associated with a specific electrode 140, data (RID) for an electrode ID of the specific electrode 140, and first distance data (SAG) associated with the specific electrode 140 transmitted from the controller 280. The second inspection device 270 may generate associated data (RD2) by matching second distance data (AS) associated with the specific electrode 140 and sealing width data (SW) associated with the specific electrode 140 with data (VID) for the virtual ID associated with the specific electrode 140, data (RID) for the electrode ID of the specific electrode 140, and first distance data (SAG) associated with the specific electrode 140. The second inspection device 270 may transmit the generated associated data (RD2) to the controller 280.

In exemplary embodiments, the controller 280 may be a Programmable Logic Controller (PLC). The PLC is a specialized form of microprocessor-based controller that uses programmable memory to store instructions and implements functions such as logic, sequencing, timing, counting, and arithmetic to control machines and processes. The PLC is easy to operate and program.

The controller 280 may include a power supply, a CPU, an input interface, an output interface, a communication interface, and memory devices. For operation of the controller 280, the power supply may be configured to supply power to other elements of the controller 280 such as the CPU, input interface, output interface, communication interface, and memory devices. The memory devices may include Read Only Memory (ROM) configured to store system programs such as an operating system and Random Access Memory (RAM) configured to store data such as user programs and status information of input and output devices, values of timers, counters, and other internal devices. The CPU may be configured to implement logic and control communication between modules that convert input signals to output operation signals. The CPU may operate based on system programs and user programs stored in the memory devices. The CPU may be configured to write or read inspection data and measurement data to or from data areas of the memory devices based on the system programs and user programs. Conditions or data of industrial devices and production processes may be transmitted to the CPU through an input module. Results processed by the CPU may be transmitted to actuators through an output module. However, this is not limited thereto, and the controller 280 may include any one of simple controllers, complex processors such as microprocessors, CPUs, GPUs, etc., processors configured by software, dedicated hardware, and firmware. The controller 280 may be implemented by, for example, a general-purpose computer or application-specific hardware such as a DSP, an FPGA, and an ASIC.

The controller 280 may transmit first distance data (SAG), data (VID) for a virtual ID, associated data (RD1), data (RID) for an electrode ID, second distance data (AS), sealing width data (SW), and associated data (RD2) to a server 290. The server 290 may be configured to store and process various data transmitted from the controller 280.

The server 290 may be implemented by hardware, firmware, software, and combinations thereof. For example, the server 290 may include computing devices such as a workstation computer, a desktop computer, a laptop computer, a tablet computer, etc. The server 290 may include any one of simple controllers, complex processors such as microprocessors, CPUs, GPUs, etc., processors configured by software, dedicated hardware, and firmware. The server 290 may be implemented by, for example, a general-purpose computer or application-specific hardware such as a DSP, an FPGA, and an ASIC. The server 290 may include a physical server or a cloud server.

Meanwhile, the sealing width of the unit sealing area 125 of the unit separator joint body 120 of the unit cell 102 may have a micro size of hundreds of micrometers to thousands of micrometers. A method of directly measuring the sealing width of the unit sealing area 125 having a micro size depends on performance of measurement equipment such as resolution, and in some cases, the measured sealing width of the unit sealing area 125 may have a large error. If high-performance measurement equipment for measuring the sealing width of the unit sealing area 125 is added, there is a problem that manufacturing costs of electrode semi-finished products increase.

According to exemplary embodiments of the present disclosure, without additional measurement equipment, based on first distance data (SAG) for a first distance between the sealing area 115 of the separator joint body 110 and a corresponding electrode 140 acquired before a cutting process and second distance data (AS) for a second distance between an edge of the unit separator joint body 120 and a corresponding electrode 140 acquired after the cutting process, a sealing width of the unit sealing area 125 of the unit separator joint body 120 provided in the unit cell 102 may be detected.

If the unit sealing area 125 of the unit separator joint body 120 provided in the unit cell 102 does not have sufficient sealing width, sealing of the unit separator joint body 120 may be broken, which may cause defects in a battery cell manufactured including the unit cell 102. According to exemplary embodiments of the present disclosure, by detecting the sealing width of the unit sealing area 125 of the unit separator joint body 120 provided in the unit cell 102, whether the unit cell 102 is defective may be determined in advance.

### (second embodiment)

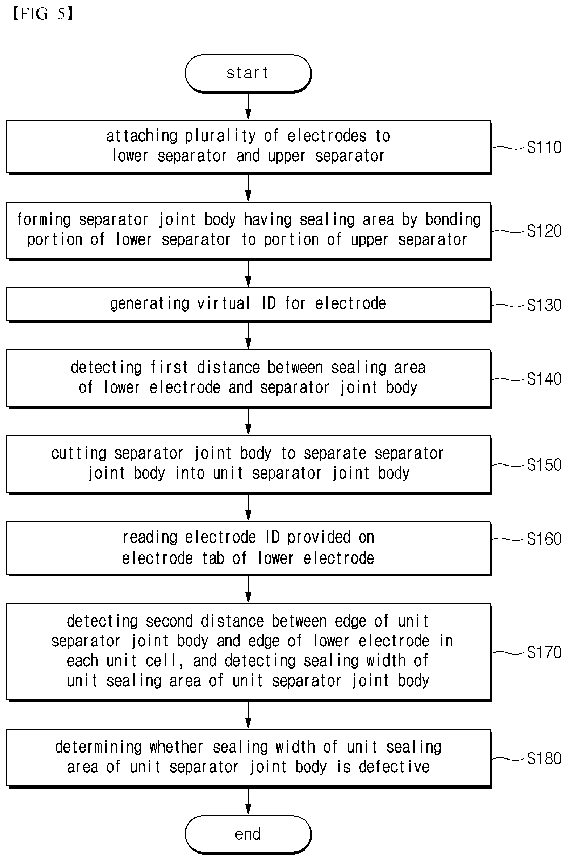

FIG. 5 is a flow diagram illustrating a manufacturing method of a battery according to exemplary embodiments of the present disclosure. Hereinafter, with reference to FIG. 1 to FIG. 5, a battery manufacturing method according to exemplary embodiments will be described.

Referring to FIG. 5, a laminate 100 including a lower separator 111, an upper separator 113, and a plurality of electrodes 140 is inserted into a lamination device 210, and the lamination device 210 performs a lamination process that attaches the plurality of electrodes 140 to the lower separator 111 and/or the upper separator 113 by applying heat and/or pressure to the laminate 100 (S110).

When the lamination process is completed, the laminate 100 that has undergone the lamination process is inserted into a sealing device 220, and the sealing device 220 performs a separator sealing process that bonds a portion of the lower separator 111 to a portion of the upper separator 113 to form a separator joint body 110 having a sealing area 115 (S120).

When the separator sealing process is completed, the tab sensor 231 detects an electrode tab of the electrode 140 extracted from the sealing device 220 to generate a tab sensing signal (TSS), and the controller 280 generates a virtual ID related to the electrode 140 having the electrode tab detected by the tab sensor 231 based on the tab sensing signal (TSS) of the tab sensor 231 (S130). More specifically, the tab sensing signal (TSS) generated by the tab sensor 231 is transmitted to a trigger board 233, the trigger board 233 generates a number request signal (NRS) based on the tab sensing signal (TSS), and the controller 280 generates a virtual ID based on the number request signal (NRS) transmitted from the trigger board 233.

Next, a laminate 101 having the separator joint body 110 and the plurality of electrodes 140 is inserted into a first inspection device 240, and the first inspection device 240 detects a first distance between each of lower electrodes 141 on both sides of the sealing area 115 of the separator joint body 110 and the sealing area 115 of the separator joint body 110 (S140). The first inspection device 240 may generate associated data (RD1) by matching first distance data (SAG) for the detected first distance with data (VID) for the virtual ID transmitted from the controller 280.

Next, the laminate 101 having the separator joint body 110 and the plurality of electrodes 140 is inserted into a cutting device 250, and the cutting device 250 performs a cutting process that cuts the separator joint body 110 of the laminate 101 (S150). Through the cutting process, the laminate 101 may be separated into a plurality of unit cells 102, and the separator joint body 110 may be separated into a plurality of unit separator joint bodies 120 mutually spaced apart with a cutting area 161 therebetween.

When the cutting process is completed, the unit cell 102 is inserted into a reader 260, and the reader 260 performs an electrode ID reading process that reads an electrode ID 143 provided on an electrode tab 142 of a lower electrode 141 included in the unit cell 102 (S160). The reader 260 reads the electrode ID 143 to generate data (RID) for the electrode ID and transmits the generated data (RID) for the electrode ID to the controller 280.

When the electrode ID reading process is completed, the unit cell 102 is inserted into a second inspection device 270, and the second inspection device 270 detects a second distance between an edge of the unit separator joint body 120 and an edge of the lower electrode 141 for each of two neighboring unit cells 102, and detects a sealing width of the unit sealing area 125 of the unit separator joint body 120 for each of the two neighboring unit cells 102 (S170). The second inspection device 270 may generate associated data (RD2) by matching second distance data (AS) and sealing width data (SW) with data (VID) for the virtual ID and data (RID) for the electrode ID.

Next, the second inspection device 270 compares the sealing width of the unit sealing area 125 of the unit separator joint body 120 with a predetermined reference range to determine whether the sealing width of the unit sealing area 125 of the unit separator joint body 120 is defective (S180).

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery manufacturing apparatus, comprising:
a sealing device configured to bond a portion of a first separator to a portion of a second separator to form a separator joint body having a sealing area;
a first inspection device configured to detect a first distance between the sealing area of the separator joint body and a first electrode attached to the separator joint body;
a cutting device configured to cut the separator joint body to separate a first unit separator joint body having the first electrode attached thereto from the separator joint body; and
a second inspection device configured to detect a second distance between the first electrode and an edge of the first unit separator joint body.

2. The battery manufacturing apparatus of claim 1, wherein the second inspection device is further configured to detect a sealing width of a unit sealing area of the first unit separator joint body based on the first distance and the second distance, and
wherein the unit sealing area of the first unit separator joint body is a portion of the sealing area of the separator joint body.

3. The battery manufacturing apparatus of claim 2, wherein the second inspection device is configured to compare the sealing width of the unit sealing area of the first unit separator joint body with a reference range.

4. The battery manufacturing apparatus of claim 3, wherein the second inspection device is configured to determine that the sealing width of the unit sealing area of the first unit separator joint body is normal when the sealing width of the unit sealing area of the first unit separator joint body is within the reference range, and
determine that the sealing width of the unit sealing area of the first unit separator joint body is defective when the sealing width of the unit sealing area of the first unit separator joint body is outside the reference range.

5. The battery manufacturing apparatus of claim 1, further comprising:
a tab sensor provided between the sealing device and the first inspection device and configured to sense an electrode tab of the first electrode extracted from the sealing device to generate a tab sensing signal; and
a controller configured to generate a virtual ID for the first electrode based on the tab sensing signal of the tab sensor,
wherein the first inspection device is configured to match data for the first distance with data for the virtual ID.

6. The battery manufacturing apparatus of claim 5, further comprises a reader configured to read an electrode ID of the first electrode extracted from the cutting device and to transmit data for the electrode ID of the first electrode to the controller.

7. The battery manufacturing apparatus of claim 6, wherein the second inspection device is configured to match data for the second distance with data for the first distance, data for the virtual ID, and data for the electrode ID.

8. The battery manufacturing apparatus of claim 6, wherein the second inspection device is further configured to detect a sealing width of a unit sealing area of the first unit separator joint body based on the first distance and the second distance,
wherein the unit sealing area of the first unit separator joint body is a portion of the sealing area of the separator joint body, and
wherein the second inspection device is configured to match data for the sealing width of the unit sealing area of the first unit separator joint body with data for the virtual ID and data for the electrode ID.

9. The battery manufacturing apparatus of claim 1, wherein the first inspection device is further configured to detect a third distance between the sealing area of the separator joint body and a second electrode attached to the separator joint body, the sealing area of the separator joint body is between the first electrode and the second electrode,
wherein the cutting device is further configured to cut the separator joint body to separate a second unit separator joint body with the second electrode attached thereto from the separator joint body, and
wherein the second inspection device is further configured to detect a fourth distance between the second electrode and an edge of the second unit separator joint body.

10. The battery manufacturing apparatus of claim 9, wherein the second inspection device is further configured to detect a sealing width of a unit sealing area of the first unit separator joint body based on the first distance and the second distance, and to detect a sealing width of a unit sealing area of the second unit separator joint body based on the third distance and the fourth distance,
wherein the unit sealing area of the first unit separator joint body is a portion of the sealing area of the separator joint body, and
wherein the unit sealing area of the second unit separator joint body is another portion of the sealing area of the separator joint body.

11. A battery manufacturing method, comprising:
forming a separator joint body having a sealing area by bonding a portion of a first separator to a portion of a second separator;
detecting a first distance between the sealing area of the separator joint body and an electrode attached to the first separator;
cutting the separator joint body to separate a first unit separator joint body having the electrode attached thereto from the separator joint body; and
detecting a second distance between the electrode and an edge of the first unit separator joint body.

12. The battery manufacturing method of claim 11, further comprising: detecting a sealing width of a unit sealing area of the first unit separator joint body based on the first distance and the second distance,
wherein the unit sealing area of the first unit separator joint body is a portion of the sealing area of the separator joint body.

13. The battery manufacturing method of claim 12, further comprising: generating a virtual ID for the electrode before the step of detecting the first distance.

14. The battery manufacturing method of claim 13, further comprising: reading an electrode ID of the electrode.

15. The battery manufacturing method of claim 14, further comprising: matching the sealing width of the unit sealing area of the first unit separator joint body with data for the virtual ID for the electrode and data for the electrode ID of the electrode.
